# FASCICULE DE BREVET EUROPEEN

(11) **EP 0 861 014 B1**
(45) Date de publication et mention de la délivrance du brevet: **27.12.2006**
(21) Numéro de dépôt: 98870030.8
(22) Date de dépôt: 16.02.1998
(51) Int. Cl.: H05B 3/14, H05B 3/26, H05B 3/74, C03C 8/18, C03C 10/00, F24C 15/10

(54) **Plaque de chauffe, en particulier plaque de cuisson en matériau vitrocéramique et procédé de fabrication de celle-ci**
Glaskeramische Heizplatte, insbesondere Kochplatte und Herstellugnsmethode dergleichen
Heating plate, especially cooking plate made from glass-ceramic and method of making the same

(30) Priorité: 14.02.1997 BE 9700141
(43) Date de publication de la demande: 26.08.1998
(73) Titulaire: Lizen, Christian, 4910 Theux (BE)
(72) Inventeur: Lizen, Christian, 4910 Theux (BE)
(74) Mandataire: Lerho, Marc J. A.

(56) Documents cités:
- EP-A- 0 429 120
- EP-A- 0 501 010
- FR-A- 2 732 960
- GB-A- 1 495 022
- JP-A- 58 185 455
- US-A- 4 286 377
- US-A- 5 177 034

## Description

### Objet de l'invention

Les matières vitrocéramiques sont des produits qui ont connu de nombreux développements ces dernières décennies, notamment dans le secteur ménager ou industriel comme plaques de chauffe ou de cuisson.

La présente invention porte sur une telle plaque en matériau vitrocéramique comportant des résistances électriques de chauffe formant corps avec le matériau vitrocéramique.

La présente invention se rapporte également à un procédé de fabrication d'une telle plaque de chauffe en matériau vitrocéramique.

### Arrière-plan technologique à la base de l'invention

On a déjà proposé à de multiples reprises, l'utilisation de plaques et/ou de dispositifs de chauffe en matériau vitrocéramique.

Un matériau vitrocéramique est un produit céramique obtenu par des techniques verrières et constitué de microcristaux dispersés dans une phase vitreuse. Ce matériau convient bien pour des usages comme des plaques de chauffe et de cuisson en cuisine.

La difficulté réside cependant dans le fait que ces plaques doivent être pourvues d'éléments de chauffe, sous forme de résistances électriques qu'il est difficile d'intégrer ou de monter sur ou dans lesdites plaques.

Dans le document US-A-4 960 978, on décrit un dispositif de cuisson électrique, constitué par une plaque portante qui peut être une feuille d'acier, de verre, de céramique ou un produit vitrocéramique sur la face inférieure de laquelle un film épais, servant de résistance électrique, est appliqué.

La difficulté de ce genre de forme d'exécution réside dans le fait que, compte tenu notamment des faibles caractéristiques de dilatation thermique d'une part de la matière vitrocéramique et d'autre part, des résistances électriques, il est très difficile de créer un contact correct entre ces deux éléments, ce qui engendre de nombreux inconvénients se rapportant notamment à la différence de conduction thermique des différents éléments.

Un dispositif de chauffage utilisable jusqu'à environ 200 °C est décrit dans le document EP-A-0 725 557 qui montre une couche céramique recouvrant un substrat dans lequel des bandes conductrices, des bandes thermiques et des bandes de résistance sont appliquées par une technique sérigraphique. Ces bandes sont recouvertes par une couche protectrice.

La couche céramique est décrite comme étant appliquée soit par une technique de pulvérisation ou par une technique d'immersion sur un substrat en acier.

Un tel matériau ne présente pas les avantages bien connus des matériaux vitrocéramiques, à savoir leur faible coefficient de dilatation, leur excellente résistance mécanique et la facilité d'entretien qui permettent leur utilisation en cuisine notamment pour des plaques de chauffe.

On constate que la plupart du temps, le mode de fonctionnement de ces différents appareils utilise une cuisson par rayonnement.

Le document EP-A-501 010 décrit une plaque de chauffe comprenant un élément de support en vitrocéramique et une couche de chauffe continue conductrice d'électricité, en émail à base de borure de molybdène.

Dans cette forme de réalisation, il est nécessaire d'appliquer une couche électriquement isolante entre la plaque vitrocéramique et la couche de chauffe pour éviter un passage du courant électrique au travers de la plaque vitrocéramique.

Ceci est obligatoire étant donné les températures élevées de fonctionnement qui peuvent atteindre 800 °C pour une puissance dissipée de 13 W/cm² prévues pour ce type de plaque.

En outre, la couche de chauffe est sous le forme d'un film qui est réparti de manière continue sur toute la surface de la plaque de chauffe et, de ce fait, ne peut pas jouer le rôle de circuit conducteur électrique.

L'application des couches est réalisée par une technique de sérigraphie et les couches sont recouvertes par une couche protectrice.

### Buts de l'invention

La présente invention vise essentiellement à porter remède aux inconvénients des solutions de la technique.

On vise notamment à supprimer toute une série de composants électriques actuellement indispensables pour la fabrication classique de ce type de plaque.

Les avantages cherchés par l'invention sont à la fois la fiabilité et d'ordre économique ou esthétique.

On vise tout particulièrement à combiner à la fois une bonne résistance aux chocs des plaques, à assurer une durée de vie importante des plaques, à obtenir des températures suffisantes et ceci de façon suffisamment rapide pour satisfaire aux besoins des utilisateurs.

D'autres critères d'ordre esthétique doivent bien entendu être remplis pour que ce type de produit corresponde, au moins en apparence et en facilité d'utilisation, aux produits existants déjà sur le marché tels que les plaques de cuisson vitrocéramique à chauffage par halogène, quartz, etc.

### Eléments caractéristiques de l'invention

Il est apparu que la difficulté principale de la réalisation d'une plaque de chauffe, et en particulier d'une plaque de cuisson basée sur une matière vitrocéramique réside, d'une part dans la différence de dilatation thermique de cette matière et celle des résistances électriques habituellement utilisées et d'autre part, dans la complexité technique d'exécution des composants électriques.

Il convient en effet de noter qu'il serait utile de pouvoir réaliser simultanément à la pose des résistances électriques, également la pose d'autres composants électriques, tels que des dispositifs de détection électromagnétique de la présence ou non sur un endroit de la plaque d'ustensiles de cuisson, tels que casseroles ou poêles ou des dispositifs de sonde de température ainsi que, bien entendu, l'équipement nécessaire aux connexions.

L'invention porte essentiellement sur une plaque de chauffe, en particulier plaque de cuisson en matériau vitrocéramique, dont la face opposée à celle destinée à recevoir les ustensiles de cuisson tels que casseroles ou poêles est pourvue d'un circuit conducteur constitué d'un émail adhérent contenant au moins une substance conductrice d'électricité.

Le fait de proposer un circuit conducteur permettra de privilégier la zone spécifique de chauffe. Ceci permet également de pouvoir limiter la puissance à des valeurs de l'ordre de 4-5 W/cm² pour des températures de fonctionnement proches de 400 °C.

L'émail constituant le circuit conducteur est obtenu à partir d'un mélange comprenant une matière frittée, de préférence à base d'un système borosilicate avec éventuellement utilisation conjointe d'une poudre de palladium qui subit une oxydation pour donner un élément actif et la substance conductrice d'électricité qui est de préférence de l'argent métallique finement divisé.

L'utilisation de masse frittée pour la réalisation d'émaux est bien connue en soi et parfaitement maîtrisée.

Ces masses peuvent comporter également des matières pigmentaires.

On a observé que, dans le cas d'une présence de pigments dans la masse frittée, pour des valeurs entre autres de l'ordre de 10%, on fragilise sensiblement le matériau vitrocéramique. De manière surprenante, on a observé qu'en chargeant cette même matière frittée au moyen d'une substance conductrice d'électricité telle que l'argent, pour des valeurs supérieures à 50% et de préférence supérieures à 70% du mélange, on observe que la fragilisation du verre disparaît.

L'incorporation en mélange avec la masse frittée d'argent métallique n'entraîne pas de difficulté particulière, notamment si l'on a recours à une technique de dépôt sérigraphique pour sa mise en oeuvre.

Il est apparu que pour le dépôt des composants de la matière de frittage, on utilisera de préférence une composition sous forme d'une pâte de viscosité adaptée.

La viscosité est généralement obtenue par un "carrier" solvant, les temps de séchage et de cuisson devant être bien entendu compatibles avec une chaîne de fabrication et le maintien de bonnes propriétés, essentiellement électriques, mais également d'adhérence sur le support vitrocéramique.

Les matériaux vitrocéramiques (appelées également pyro-céramiques) sont de préférence celles obtenues à partir de verre quaternaire SiO₂/Al₂O₃/Li₂O/MgO ensemencé par TiO₂. Ils sont essentiellement constitués de cristaux de β-spodumène Li₂OAl₂O₃₄SiO₂ comme phase principale et d'un peu de β-eucryptique Li₂Al₂O₃₂SiO₂ cordiérite et de rutile. Le bas coefficient de dilatation du β-spodumène, de l'ordre de -10 à +20x10⁻⁷, leur confère une excellente résistance aux chocs thermiques.

Le matériau vitrocéramique est de préférence transparent mais peut dans certains cas être plus ou moins coloré dans la masse.

Selon une première forme d'exécution particulièrement préférée, on effectue directement le dépôt du circuit conducteur constitué d'un émail adhérent sur le matériau vitrocéramique que l'on soumet à une cuisson. L'ensemble étant ensuite recouvert par une couche de peinture résistant à haute température et de préférence à des températures supérieures à 650 °C ceci sur la face opposée à celle destinée à recevoir les ustensiles de cuisine.

Selon une autre forme d'exécution particulièrement préférée et qui semble recevoir les préférences des utilisateurs, on a recours à un décor sous forme d'une glaçure colorée, habituellement noire appelée également émail non conducteur. Il est possible de réaliser une telle glaçure de décoration interposée entre la matière vitrocéramique et l'émail à fonction de résistance électrique, à condition d'utiliser un agent de glaçure ayant un coefficient de dilatation adaptée, de préférence sans plomb.

De préférence, on évitera, pour obtenir la coloration noire de la couche de glaçure ou d'émail non conducteur, d'avoir recours à des éléments d'addition tel que le chrome. En effet, au sein de la glaçure ou dans la couche conductrice, le chrome produit, dans le cas de températures élevées, une augmentation de la résistance localement.

La présente invention se rapporte également à un procédé de fabrication de plaques de chauffe et en particulier de plaques de cuisson en matériau vitrocéramique tel que décrit précédemment.

Selon une forme d'exécution préférée de l'invention, l'application d'émail s'effectue par une technique sérigraphique qui permet de constituer un motif sur la plaque. Cette technique peut être en particulier avantageusement mise à profit pour réaliser par exemple des "dessins" dont l'utilité est non seulement esthétique mais, ainsi qu'il le sera expliqué plus loin, également fonctionnel.

En principe, la technique sérigraphique permet le dépôt de circuits ou pistes à fonction essentiellement de résistance électrique servant à la chauffe. Elle permet également de réaliser la détection de la présence d'éléments notamment métalliques, en particulier d'ustensiles de cuisson sur la plaque par des techniques capacitives ou inductives.

En combinaison avec les deux possibilités précédentes, il est également possible de prévoir un circuit servant de sonde de température sur la plaque.

La plaque peut être divisée en secteurs qui sont gérés individuellement, toutes ces possibilités pouvant être obtenues par le recours, de préférence, à la technique sérigraphique dont la souplesse et la précision de dépose d'éléments décoratifs ou fonctionnels est bien connue.

La technique de dépôt sous forme d'un émail, en particulier par recours à des dispositifs d'application sérigraphique permet d'obtenir une bonne adhérence et cette technique permet également d'éviter les problèmes majeurs de l'état de la technique liés à l'absence de cohérence des coefficients de dilatation du matériau vitrocéramique et de la résistance.

De manière avantageuse, la technique de pose par sérigraphie permet aisément de réaliser des films ou bandes continus dont l'épaisseur optimale actuelle est estimée être de l'ordre de 100 µ.

Il convient de noter que des techniques de dépôt sérigraphique de poudres ont été largement proposées et que celles-ci peuvent être également appliquées dans le cadre de l'invention.

Bien entendu, dans la mesure où d'autres techniques de pose que les techniques sérigraphiques se révèlent avantageuses, celles-ci peuvent être également mises en oeuvre selon l'invention.

En vue d'obtenir un émaillage ou une vitrification de la poudre constituée à base du mélange de matière frittée avec la substance conductrice d'électricité, on réalise ensuite une cuisson à des températures supérieures à 800 °C et, dans le cas de matières exemptes de plomb, à des températures pouvant même dépasser les 900 °C.

Ainsi qu'il a été indiqué précédemment, le recours à la technique sérigraphique permet d'obtenir de nombreux effets décoratifs mais également utilitaires.

C'est ainsi qu'il est possible d'envisager en plus du dépôt d'émail à caractère de résistance de chauffe, un dépôt à effet inductif ou capacitif permettant de détecter la présence d'un élément, notamment d'un élément métallique sur la plaque, par exemple la présence d'un ustensile de cuisson.

Il est également possible d'appliquer par une technique sérigraphique, par exemple une concentration plus élevée d'éléments résistants par zone sur la plaque. Cette variation de concentration peut être rendue visible sur la plaque et indiquera à l'utilisateur qu'une zone de la plaque convient mieux pour une cuisson et qu'un autre zone peut être utilisée pour un maintien à température.

De nombreuses autres variantes peuvent être aisément envisagées.

Il est possible d'incorporer également par une technique sérigraphique dans la plaque de cuisson des sondes thermiques localisées qui permettent, par un circuit électronique, de piloter efficacement les puissances de chauffe locale, par exemple en mesurant la variation de la résistance en fonction de la température dans le circuit de chauffe ou, de préférence, dans un circuit complémentaire séparé.

Avantageusement, la plaque est divisée en un certain nombre de secteurs, équipés chacun d'éléments de détection électromagnétique tels que ceux précités et de sondes individuelles. Ceci permet par exemple à l'utilisateur de déposer pratiquement n'importe où une casserole sur la plaque de cuisson, uniquement le secteur concerné par la présence de cet ustensile étant détecté et étant chauffé individuellement.

Tous les dispositifs de commande, électroniques et autres, ainsi que de régulation de détection peuvent être utilisés.

Un avantage particulier est que le câblage et la connexion soit à une source de puissance, soit à des dispositifs de régulation, de mesure et de détection est facilité en ce sens que le câblage peut être réalisé aisément en utilisant des pistes de grande largeur qui servent simplement de conducteur électrique, en particulier vers la partie utilisée comme résistance électrique chauffante.

On observe que le mode de fonctionnement de la plaque de chauffe selon la présente invention permet une cuisson par conduction et non plus par radiation.

De nombreuses autres variantes d'exécution apparaîtront aisément aux spécialistes à la lecture du mémoire descriptif.

Ces variantes d'exécution relèvent bien entendu de la portée générale de la présente invention telle que définie dans les revendications qui suivent.

### Brève description des figures

La figure 1 représente une forme particulièrement préférée et avantageuse de la présente invention.

La figure 2 représente une autre forme d'exécution qui convient mieux pour des raisons esthétiques aux utilisateurs.

### Description détaillée des figures.

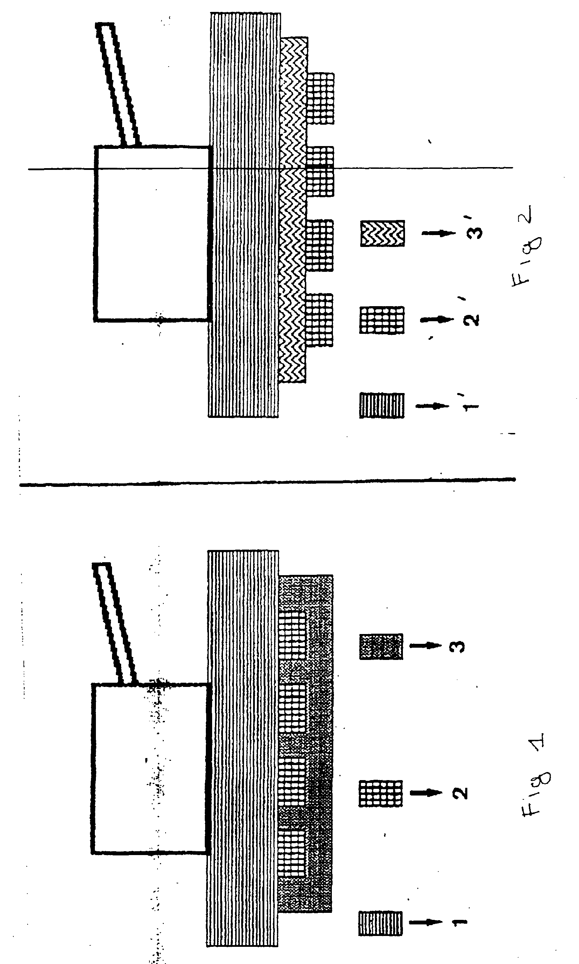

La figure 1 représente la forme la plus avantageuse de la présente invention. Il convient de noter qu'il s'agit de représentations schématiques et que les échelles ne sont pas conformes à la réalité.

Le repère 1 représente le matériau vitrocéramique de la plaque sur laquelle on a déposé une poudre comprenant une matière frittée en vue de réaliser un émail mélangée à une substance conductrice ceci par une technique de sérigraphie en vue d'obtenir le motif d'un circuit conducteur 2. L'épaisseur du matériau vitrocéramique est de quelques millimètres tandis que l'épaisseur de l'émail adhérent formant le film est de l'ordre de 100 µ. On soumet ensuite le tout à une cuisson à température très élevée en vue d'obtenir l'émaillage ou vitrification de l'ensemble.

Dans une troisième étape, on effectue un dépôt d'une peinture 3 résistant à haute température en vue d'obtenir un matériau vitrocéramique foncé sur lequel apparaît par transparence le circuit conducteur.

Pour des raisons esthétiques, certains utilisateurs préféreront la seconde forme d'exécution du produit selon laquelle on réalise le dépôt d'une couche décoratrice 3' à l'aide d'un émail qui permet d'obtenir une coloration noire de la plaque vitrocéramique 1'.

Ensuite, on effectue, comme décrit précédemment, et de préférence par sérigraphie un dépôt d'un mélange comprenant une matière frittée mais également la substance conductrice d'électricité en vue de réaliser le circuit conducteur 2'.

## Revendications

1. Plaque de chauffe, en particulier plaque de cuisson en matériau vitrocéramique (1 ou 1'), dont la face opposée à celle destinée à recevoir les ustensiles de cuisson tels que casseroles ou poêles est pourvue d'un dépôt d'émail adhérent contenant au moins une substance conductrice d'électricité, l'émail formant un circuit conducteur d'électricité (2 ou 2') sur ladite face opposée de la plaque de chauffe en matériau vitrocéramique, **caractérisée en ce que** ledit émail est obtenu à partir d'un mélange comprenant une matière frittée et ladite substance conductrice d'électricité qui est de l'argent métallique finement divisé.

2. Plaque selon la revendication 1, **caractérisée en ce que** la matière frittée est à base d'un système borosilicate avec éventuellement utilisation conjointe d'une poudre de palladium qui subit une oxydation pour donner un élément actif.

3. Plaque selon la revendication 1 ou 2, **caractérisée en ce que** la matière frittée présente dans l'émail qui va constituer le circuit conducteur comprend également des pigments colorants.

4. Plaque selon la revendication 3, **caractérisée en ce que** la proportion de la substance conductrice au sein du mélange constituant l'émail est supérieure à 50% et de préférence supérieure à 70%.

5. Plaque selon l'une quelconque des revendications précédentes, **caractérisée en ce que** le mélange en vue de réaliser l'émail constituant le circuit conducteur est exempt de plomb.

6. Plaque selon l'une quelconque des revendications précédentes, **caractérisée en ce** le matériau vitrocéramique est obtenu à partir de verre quaternaire SiO₂/Al₂O₃/Li₂O/MgO ensemencé par TiO₂.

7. Plaque selon la revendication 6, **caractérisée en ce que** le matériau vitrocéramique est essentiellement constitué de cristaux de β-spodumène Li₂OAl₂O₃₄SiO₂ comme phase principale et de β-eucryptique Li₂Al₂O₃₂SiO₂ cordiérite et de rutile.

8. Plaque selon la revendication 6 ou 7, **caractérisée en ce que** le matériau vitrocéramique est transparent ou plus ou moins coloré dans la masse.

9. Plaque selon l'une quelconque des revendications précédentes, **caractérisée en ce que** le circuit conducteur constitué par l'émail adhérent se présente sous la forme d'un film ou d'une bande continu dont l'épaisseur optimale est de l'ordre de 100µ.

10. Plaque selon l'une quelconque des revendications précédentes, **caractérisée en ce qu'**une glaçure ou un émail de décoration (3') essentiellement exempt de substances conductrices est présent entre le matériau vitrocéramique et le circuit conducteur et présentant un coefficient de dilatation adapté.

11. Plaque selon l'une quelconque des revendications 1 à 9, **caractérisée en ce qu'**elle comprend en outre une couche de peinture (3) résistant à haute température, de préférence à des températures supérieures à 650 °C, sur l'ensemble de la face opposée à celle destinée à recevoir les ustensiles de cuisine.

12. Plaque selon l'une quelconque des revendications précédentes, **caractérisée en ce que** le circuit conducteur servant de résistance de chauffe permet, par une mesure de l'effet capacitif et/ou inductif, de détecter la présence d'éléments métalliques tels que des ustensiles de cuisson posés sur la plaque.

13. Plaque selon l'une quelconque des revendications précédentes, **caractérisée en ce que** le circuit conducteur sert également de sonde de mesure de la température sur la plaque.

14. Plaque selon l'une quelconque des revendications précédentes, **caractérisée en ce qu'**elle est divisée en secteurs qui sont gérés individuellement.

15. Plaque selon l'une quelconque des revendications précédentes, **caractérisée en ce qu'**elle comporte en outre des sondes thermiques localisées qui permettent, à l'aide d'un circuit électronique complémentaire, de piloter efficacement les puissances de chauffe locale.

16. Procédé de fabrication d'une plaque de chauffe et en particulier plaque de cuisson en matériau vitrocéramique **caractérisé en ce que** l'on dépose sur la face de la plaque opposée à celle destinée à recevoir les ustensiles de cuisson tels que casseroles ou poêles, un mélange comprenant, d'une part, au moins une substance conductrice d'électricité qui est de l'argent métallique et, d'autre part, une matière frittée, de préférence à base d'un système borosilicate, avec éventuellement utilisation conjointe de poudre de palladium qui subit une oxydation pour donner un élément actif en vue de la réalisation d'un émail, ce dépôt s'effectuant selon une technique sérigraphique en vue de constituer un motif sous forme d'un circuit sur l'envers de la plaque, et **en ce que** l'on soumet le tout à une cuisson, de préférence à une température supérieure à 800°C, en vue d'obtenir un émaillage ou une vitrification de l'ensemble.

17. Procédé selon la revendication 16, **caractérisé en ce que** l'on dispose, avant le dépôt du mélange comprenant au moins une substance conductrice d'électricité, une couche décorative non conductrice et **en ce que** l'on soumet le tout à une cuisson en vue d'obtenir la vitrification ou l'émaillage des deux couches disposées sur l'envers de la plaque.

18. Procédé selon la revendication 16, **caractérisé en ce que**, après la cuisson, on revêt sur l'ensemble sur la face opposée à celle destinée à recevoir les ustensiles de cuisson une peinture résistant à haute température et de préférence résistant à des températures supérieures à 650°C.

## Claims

1. Heating plate, in particular cooking plate made of vitroceramic material (1 or 1'), whose face opposite to that intended to receive cooking utensils such as saucepans or frying pans is provided with an adhesive enamel deposit comprising at least one electrically conductive substance, the enamel forming an electrically conductive circuit (2 or 2') on said face opposite to the heating plate made of vitroceramic material, **characterised in that** said enamel is obtained from a mixture comprising a sintered material and said electrically conductive substance, which is finely divided metallic silver.

2. Plate according to Claim 1, **characterised in that** the sintered material is based on a borosilicate system, possibly combined with the use of a palladium powder that undergoes oxidation to give an active element.

3. Plate according to Claim 1 or 2, **characterised in that** the sintered material present in the enamel that will form the conductive circuit also comprises colouring pigments.

4. Plate according to Claim 3, **characterised in that** the proportion of conductive substance within the mixture forming the enamel is higher than 50%, and preferably higher than 70%.

5. Plate according to any one of the preceding claims, **characterised in that** the mixture for making the enamel that forms the conductive circuit is lead-free.

6. Plate according to any one of the preceding claims, **characterised in that** the vitroceramic material is obtained from quaternary glass SiO₂/Al₂O₃/Li₂O/MgO seeded with TiO₂.

7. Plate according to Claim 6, **characterised in that** the vitroceramic material is essentially made of crystals of β-spodumene Li₂OAl₂O₃₄SiO₂ as the main phase and of β-eucryptic Li₂Al₂O₃₂SiO₂ cordierite and of rutile.

8. Plate according to Claim 6 or 7, **characterised in that** the vitroceramic material is transparent or more or less coloured throughout.

9. Plate according to any one of the preceding claims, **characterised in that** the conductive circuit formed by the adhesive enamel is in the form of a film or of a continuous band whose optimum thickness is of the order of 100µ.

10. Plate according to any one of the preceding claims, **characterised in that** a decorative glaze or enamel (3') essentially devoid of conductive substances is present between the vitroceramic material and the conductive circuit and has an adapted expansion coefficient.

11. Plate according to any one of Claims 1 to 9, **characterised in that** it also comprises a paint layer (3) resisting to high temperatures, preferably to temperatures higher than 650°C, over the entire face opposite to that intended to receive kitchen utensils.

12. Plate according to any one of the preceding claims, **characterised in that** the conductive circuit acting as a heating resistor allows, by measuring the capacitive and/or inductive effect, to detect the presence of metal objects such as cooking utensils on the plate.

13. Plate according to any one of the preceding claims, **characterised in that** the conductive circuit also acts as a sensor for measuring the temperature on the plate.

14. Plate according to any one of the preceding claims, **characterised in that** it is divided into sectors that are individually controlled.

15. Plate according to any one of the preceding claims, **characterised in that** it also comprises localised heat sensors that allow to efficiently regulate the local heat level by means of an additional electronic circuit.

16. Method for manufacturing a heating plate, and in particular a cooking plate made of a vitroceramic material, **characterised in that** on the face of the plate opposite to that intended to receive cooking utensils such as saucepans or frying pans, a mixture is deposited comprising, for one thing, at least one electrically conductive substance which is metallic silver and, for another, a sintered material, preferably based on a borosilicate system, possibly combined with the use of palladium powder that undergoes oxidation to create an active element in order to produce an enamel, this deposit being formed by a screenprinting technique in order to create a pattern in the form of a circuit at the back of the plate, and **in that** the whole is subjected to curing, preferably at a temperature higher than 800°C, in order to obtain enamelling or vitrification of the whole.

17. Method according to Claim 16, **characterised in that**, before depositing the mixture with at least one electrically conductive substance, a non-conductive decorative layer is laid and **in that** the whole is subjected to curing in order to obtain vitrification or enamelling of both layers laid on the back of the plate.

18. Method according to Claim 16, **characterised in that**, after the curing, on the face opposite to that intended to receive the cooking utensils, the whole piece is covered with a paint resisting to high temperatures, and preferably resisting to temperatures higher than 650°C.

## Patentansprüche

1. Heizplatte, insbesondere Kochplatte aus Glaskeramikmaterial (1 oder 1'), dessen eine Seite, die der Seite, die das Kochzubehör wie Töpfe oder Pfannen aufnimmt, gegenüberliegt, mit einer anhaftenden Emailschicht versehen ist, die mindestens eine elektrisch leitfähige Substanz enthält, wobei das Email auf der besagten gegenüberliegenden Seite der Heizplatte aus Glaskeramikmaterial einen Stromkreis (2 oder 2') bildet, **dadurch gekennzeichnet, dass** das besagte Email aus einer Mischung hergestellt wird, die ein Frittenmaterial und die besagte elektrisch leitfähige Substanz umfasst, die aus fein verteiltem metallischen Silber besteht.

2. Platte nach Anspruch 1, **dadurch gekennzeichnet, dass** das Frittenmaterial auf der Basis eines Borosilikat-Systems hergestellt ist, eventuell mit der gleichzeitigen Verwendung eines Palladiumpulvers, das eine Oxidation durchläuft und **dadurch** zu einem aktiven Element wird.

3. Platte nach Anspruch 1 oder 2, **dadurch gekennzeichnet, dass** das Frittenmaterial, das im Email vorhanden ist, der den Stromkreis bilden wird, auch Farbpigmente enthält.

4. Platte nach Anspruch 3, **dadurch gekennzeichnet, dass** der Anteil der leitfähigen Substanz in der Mischung, die das Email bildet, höher als 50% und vorzugsweise höher als 70% ist.

5. Platte nach einem der vorstehenden Ansprüche, **dadurch gekennzeichnet, dass** die Mischung zur Herstellung des Emails, das den Stromkreis bildet, kein Blei enthält.

6. Platte nach einem der vorstehenden Ansprüche, **dadurch gekennzeichnet, dass** das Glaskeramikmaterial aus Quaternär-Glas SiO₂/Al₂O₃/Li₂O/MgO mit eingeimpftem TiO₂ hergestellt wird.

7. Platte nach Anspruch 6, **dadurch gekennzeichnet, dass** das Glaskeramikmaterial im Wesentlichen aus β-Spodumen-Li₂OAl₂O₃₄SiO₂-Kristallen als Hauptphase und aus β-Eukryptit-Li₂Al₂O₃₂SiO₂-Cordierit und Rutil besteht.

8. Platte nach Anspruch 6 oder 7, **dadurch gekennzeichnet, dass** das Glaskeramikmaterial durchsichtig ist oder mehr oder weniger stark in der Masse gefärbt ist.

9. Platte nach einem der vorstehenden Ansprüche, **dadurch gekennzeichnet, dass** der leitende Stromkreis, der durch das anhaftende Email gebildet wird, als Folie oder fortlaufendes Band vorliegt, dessen optimale Dicke in der Größenordnung von 100 µ liegt.

10. Platte nach einem der vorstehenden Ansprüche, **dadurch gekennzeichnet, dass** zwischen dem Glaskeramikmaterial und dem Stromkreis eine Glasur oder ein Dekorationsemail (3') vorhanden ist, der im Wesentlichen frei von leitfähigen Substanzen ist und einen geeigneten Dehnungskoeffizienten aufweist.

11. Platte nach einem der Ansprüche 1 bis 9, **dadurch gekennzeichnet, dass** sie außerdem über die gesamte Fläche, die der Seite gegenüberliegt, die das Kochzubehör aufnimmt, eine hitzefeste Lackschicht (3) aufweist, die vorzugsweise Temperaturen über 650°C standhält.

12. Platte nach einem der vorstehenden Ansprüche, **dadurch gekennzeichnet, dass** es der Stromkreis, der als Heizwiderstand dient, durch eine Messung der kapazitiven und/oder induktiven Wirkung ermöglicht, die Anwesenheit von metallischen Objekten wie Kochzubehör auf der Platte festzustellen.

13. Platte nach einem der vorstehenden Ansprüche, **dadurch gekennzeichnet, dass** der Stromkreis auch als Temperaturmesssonde auf der Platte dient.

14. Platte nach einem der vorstehenden Ansprüche, **dadurch gekennzeichnet, dass** sie in Sektoren aufgeteilt ist, die einzeln gesteuert werden.

15. Platte nach einem der vorstehenden Ansprüche, **dadurch gekennzeichnet, dass** sie außerdem stellenweise thermische Sonden umfasst, die mit einer zusätzlichen Elektronikschaltung die effiziente Steuerung der lokalen Heizleistungen ermöglicht.

16. Herstellungsverfahren für eine Heizplatte und insbesondere eine Kochplatte aus Glaskeramikmaterial, **dadurch gekennzeichnet, dass** auf der Seite der Platte, die der Seite, die das Kochzubehör wie Töpfe oder Pfannen aufnimmt, gegenüberliegt, eine Mischung aufgebracht wird, die einerseits mindestens eine elektrisch leitfähige Substanz enthält, die aus metallischen Silber besteht, und andererseits ein Frittenmaterial, vorzugsweise auf der Basis eines Borosilikat-Systems, eventuell mit der gleichzeitigen Verwendung eines Palladiumpulvers, das eine Oxidation durchläuft und **dadurch** ein aktives Element zur Herstellung eines Emails wird; wobei diese Beschichtung durch ein Siebdruckverfahren erfolgt, um ein Muster in Form eines Stromkreises auf die Rückseite der Platte aufzubringen, und **dadurch**, dass das Ganze einem Brennvorgang, vorzugsweise bei einer Temperatur über 800°C unterzogen wird, um eine Emaillierung oder Verglasung der ganzen Einheit zu erreichen.

17. Verfahren nach Anspruch 16, **dadurch gekennzeichnet, dass** vor der Beschichtung mit der Mischung, die mindestens eine elektrisch leitfähige Schicht enthält, eine nicht leitfähige dekorative Schicht aufgebracht wird und dass das Ganze einem Brennvorgang unterzogen wird, um eine Emaillierung oder Verglasung der beiden auf der Rückseite der Platte aufgebrachten Schichten zu erreichen.

18. Verfahren nach Anspruch 16, **dadurch gekennzeichnet, dass** auf die gesamte Fläche, die der Seite gegenüberliegt, die das Kochzubehör aufnehmen soll, nach dem Brennvorgang eine hitzefeste Lackierung, die vorzugsweise Temperaturen über 650°C standhält, aufgebracht wird.
